# EUROPEAN PATENT APPLICATION

(11) **EP 4 592 165 A1**
(43) Date of publication of application: **30.07.2025**
(21) Application number: 25153495.4
(22) Date of filing: 23.01.2025
(51) Int. Cl.: B62D 33/04

(54) **SPLIT PORTAL OF THE TRUCK BODY**

(30) Priority: 24.01.2024 PL 44758824
(71) Applicant: GT Trailers Spolka z Ograniczona Odpowiedzialnoscia, 46-037 Kurznie (PL)
(72) Inventor: GNIOT, Kazimierz, 46-037 Kurznie (PL)
(74) Representative: Ptasinski, Konrad Witold

(57) **Abstract**

A split superstructure portal of a truck body comprising a roof (1), a door (5), corner posts (8) and a front wall (11), a roof carriage (12) connected with moveable arms (13) and resting on rollers (14) allowing the carriage (12) to move on two roof rails (2) parallel to each other and connected to each other with perpendicular moveable crossbars (15), a roof lifting mechanism (9), an anti-sliding roof (1) protection (4) and a roof connector (16), **characterized in that** the superstructure portal is a fixed beam (7) and a moveable beam (3) in the shape of a rectangular bar permanently fastened at a right angle to a rectangular bar (3a) having a bending and notches (3b) in the locations corresponding to the locations of latches (6) permanently fastened to the fixed beam (7) of the portal removably mounted on fixing pins (10) permanently fastened to the rear corner posts (8) of the body, and the moveable beam (3) is permanently fastened with the moveable arms (13) of the roof carriage (12).

## Description

The present invention relates to a split rear portal of a truck bodywork, including a trailer, a semi-trailer or a swap body. The solution is intended for the superstructures of bodies provided mainly with a sliding roof system and a rear door.

Patent No. Pat.238265 discloses a split upper beam of a truck bodywork portal, the bodywork comprising a roof, a door, corner posts and a front wall, characterized in that the beam is a roof beam removably connected with a portal beam through a latch lock mechanism permanently fastened to the roof beam and through portal beam protective mechanisms, wherein the roof beam has pins arranged at the ends of the roof beam and parallel thereto and is connected through moveable arms with a roof carriage provided with rollers allowing the carriage to move on two roof rails parallel to each other and ending on their one side with permanently fastened connectors between the roof and the corner posts, wherein the connectors are provided with pins and with elastic elements perpendicular to the bolts, and the roof rails are connected with each other through moveable crossbars installed at regular distances in parallel to the roof beam and to the portal beam, and wherein the portal beam additionally has conical spring elements arranged on its top and providing good contact between the beams.

Document US 2008034683 discloses a "Seal for an open door of a vehicle." In this solution, the door comprises two hinged swinging panels arranged at the rear of the vehicle. The rear door panels or the side body panels are provided with protective means which prevent the bumping of the rear panels against the vehicle sides when the door is fully open.

Document FR 2802967 discloses a "Hinge for rear door of commercial vehicle with mechanism to hold door in maximum open position against the side of vehicle." In this solution, the hinge comprises a fixed component fastened to the body of the vehicle, a component fastened to the door of the vehicle, an intermediate component connected to the other two by pivots, and also a mechanism to hold door in open position.

The known solutions allow the sliding of the roof and the loading from the top after the door had been previously opened, and in the case when the door does not need to be previously opened there is a fixed member connecting the body corner posts, which hinders the loading from the rear of the body.

The object of the invention is to provide a universal portal beam of a truck superstructure enabling the loading of the cargo both through the roof without the need to open the door and in a traditional manner.

The present invention provides a split superstructure portal of a truck body comprising a roof, a door, corner posts and a front wall, a roof carriage connected with moveable arms and resting on rollers allowing the carriage to move on two roof rails parallel to each other and connected to each other with perpendicular moveable crossbars, a roof lifting mechanism, an anti-sliding roof protection and a roof connector, characterized in that the superstructure portal is a fixed portal beam and a moveable portal beam in the shape of a rectangular bar permanently fastened at a right angle to a rectangular bar having a bending and notches in the locations corresponding to the locations of latches permanently fastened to the fixed portal beam removably mounted on fixing pins permanently fastened to the rear corner posts of the body, and the moveable beam is permanently fastened with the moveable arms of the roof carriage.

Advantageously, the split portal of a truck superstructure allows both the lifting and opening the roof without the need to open the rear door - depending on the loading situation and method.

Advantageously, the split portal of a truck superstructure comprises two components. Such an arrangement of the portal allows the elimination of additional fasteners, and/or mechanisms fixing the position of the portal on the superstructure. Moreover, there are no additional fasteners, fixing mechanisms or locking mechanisms which may become damaged, and the roof can be lifted and slid without the need to open the rear door of the superstructure.

The split portal of a truck body superstructure has been shown in the drawing, in which:

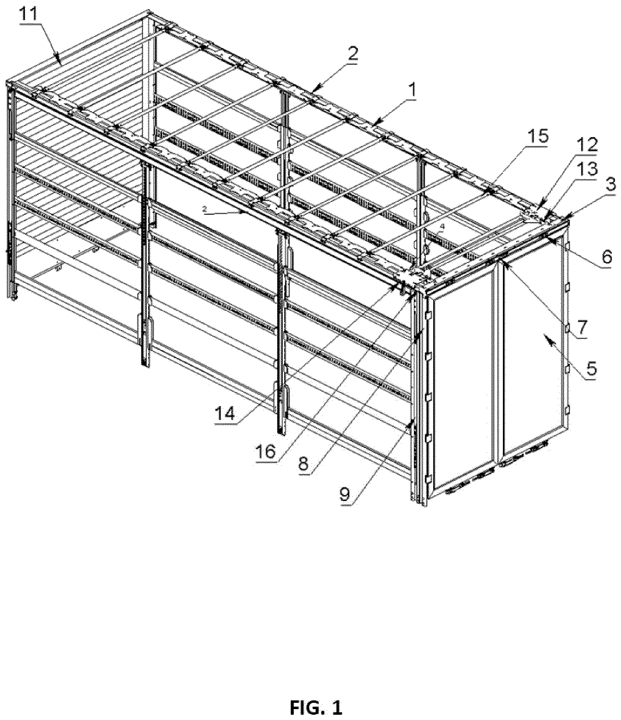

Fig. 1 shows a complete superstructure (axonometric view)

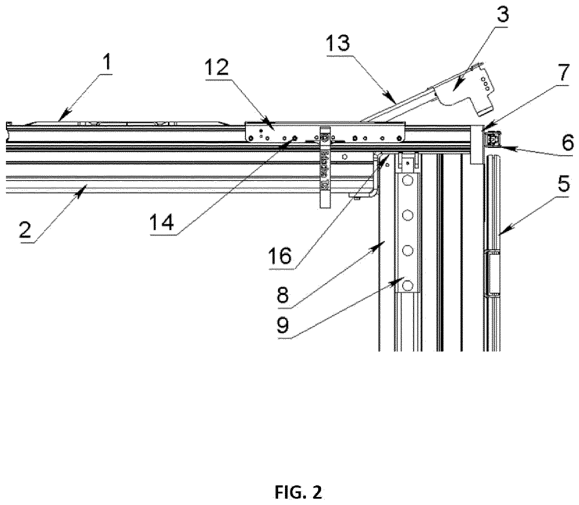

Fig. 2 shows a lifted moveable part of the portal (side view, enlarged rear of the superstructure)

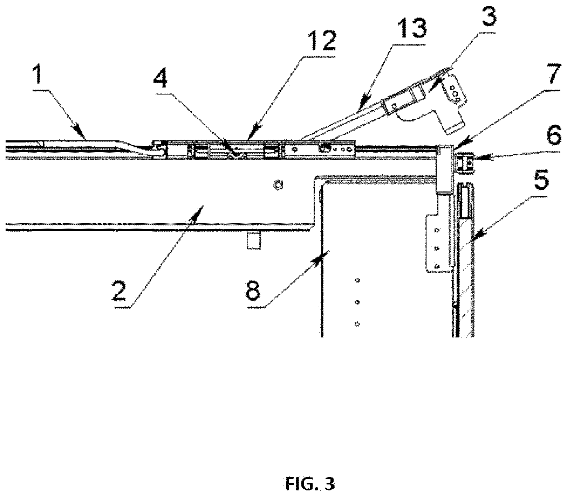

Fig. 3 shows a lifted moveable part of the portal (side view, cross-section, enlarged rear of the superstructure)

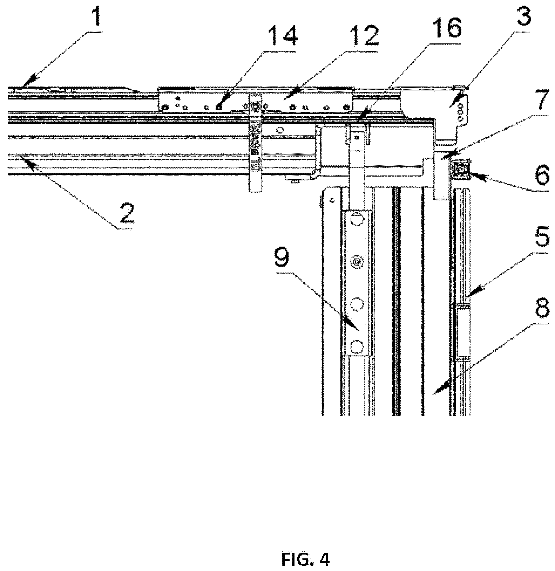

Fig. 4 shows a complete superstructure with the lifted roof (side view, enlarged rear of the superstructure)

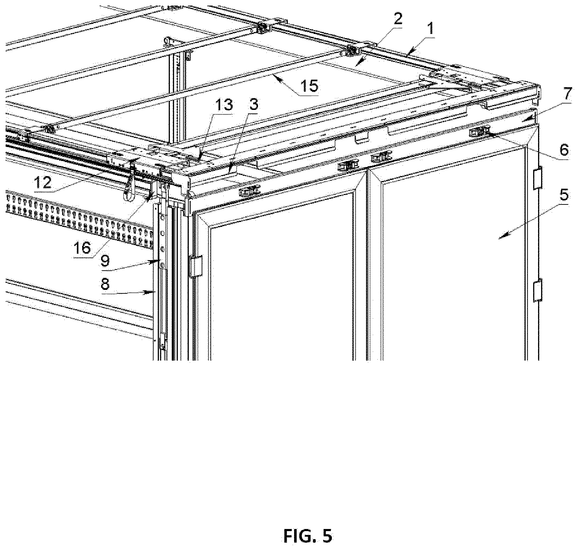

Fig. 5 shows a complete superstructure with the lifted roof (axonometric view, enlarged rear of the superstructure)

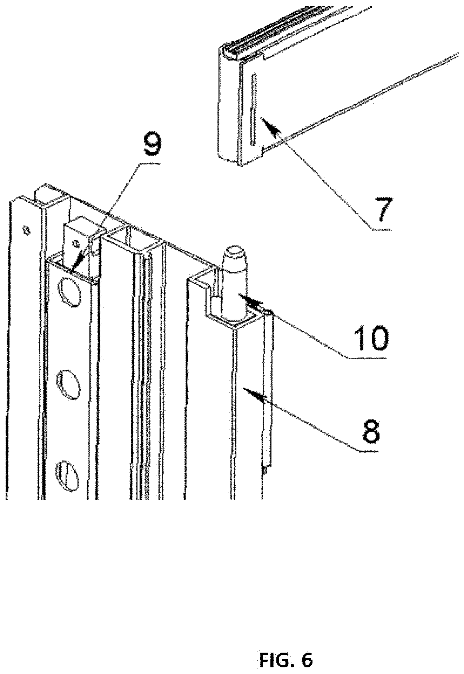

Fig. 6 shows enlarged pins fixing the position of the fixed part of the portal on the corner post (axonometric view)

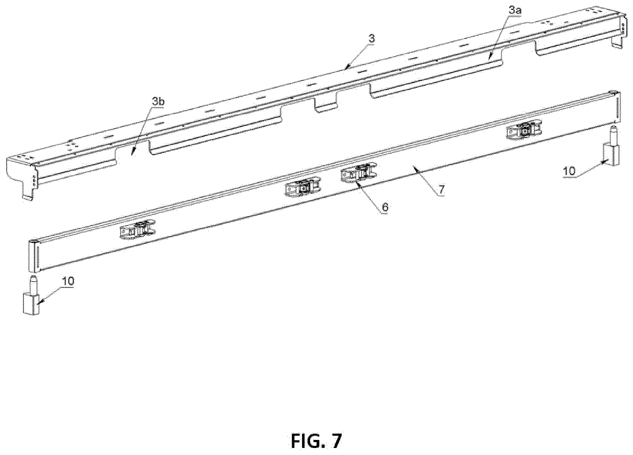

Fig. 7 shows elements forming the rear beam (of the portal) - (axonometric exploded view)

### Example

A split superstructure portal of a truck body comprising a roof 1, a door 5, corner posts 8 and a front wall 11, a roof carriage 12 connected with moveable arms 13 and resting on rollers 14 allowing the carriage 12 to move on two roof rails 2 parallel to each other and connected to each other with perpendicular moveable crossbars 15, a roof lifting mechanism 9, an anti-sliding roof 1 protection 4 and a roof connector 16 is characterized in that the superstructure portal is a fixed beam 7 and a moveable beam 3 in the shape of a rectangular bar permanently fastened at a right angle to a rectangular bar 3a having a bending and notches 3b in the locations corresponding to the locations of latches 6 permanently fastened to the fixed beam 7 removably mounted on fixing pins 10 permanently fastened to the rear corner posts 8 of the body, and the moveable beam 3 is permanently fastened with the moveable arms 13 of the roof carriage 12.

### Opening (sliding) the roof without opening the rear door

In this work condition, the door 5 is closed, the moveable beam 3 of the portal is lifted, the beam 3 being connected with the roof 1 of the superstructure through the moveable arm 13 of the roof carriage 12, the anti-sliding roof 1 locks 4 should be released and the roof 1 should be opened (slid), the door 5 remains closed, the upper latches 6 of the door 5 with the entire fixed beam 7 of the portal remain in the same position (are not lifted together with the portal, as in state-of-the-art solutions), the fixed beam 7 of the portal is mounted on pins 10 fastened to the rear corner posts 8 of the superstructure.

The truck has a superstructure comprising the roof 1, the roof rails 2, the crossbars 15 of the roof 1, the roof lifting mechanism 9, the door 5, the rear corner posts 8 and the front wall 11, and the splitportal of this superstructure is the moveable beam 3 fastened to the roof 1 and the fixed beam 7 mounted on the pins 10, which are fastened to the rear corner posts 8 of the superstructure, the moveable beam 3 fastened to the roof 1 is connected thereto with the roof carriage 12 through moveable arms 13, the roof carriage 13 has rollers 14, the carriage 13 moves on the roof rails 2 parallel to each other, the roof rails 2 are connected to each other with the roof crossbars 15.

The self-opening (sliding) of the roof 1 is impossible because the protection 4 prevents the moveable beam 3 of the portal from being lifted, and the moveable beam 3 of the portal in the closed position rests on the fixed beam 7 of the portal, thus blocking the possibility in which the roof 1 slides.

### Lifting the roof without opening the rear door

In this work condition the door 5 is closed. Using the mechanisms 9 for lifting the roof 1, the entire roof 1 should be lifted, the door 5 remains closed, the upper door latches 6 remain in the configuration securing the door 5 in closed condition on the fixed beam 7 mounted on the corner posts 8 of the superstructure through the pins 10.

The self-opening of the roof 1 is prevented by the structure of the roof 1 lifting mechanisms 9, whose structure have protective means preventing the self-lifting of the roof.

### Obtaining the entire loading height from the rear with the door open

The door 5 should be opened and the roof 1 should be slid, the fixed beam 7 of the portal, to which the door latches 6 are fastened, is mounted on the corner posts 8, in the posts 8 there are fastened the pins 10 fixing the fixed beam 7 of the portal, the fixed portal beam 7 can be removed from the superstructure without the use of any tools or fasteners because it is mounted on the pins 10.

## Claims

1. A split superstructure portal of a truck body comprising a roof (1), a door (5), corner posts (8) and a front wall (11), a roof carriage (12) connected with moveable arms (13) and resting on rollers (14) allowing the carriage (12) to move on two roof rails (2) parallel to each other and connected to each other with perpendicular moveable crossbars (15), a roof lifting mechanism (9), an anti-sliding roof (1) protection (4) and a roof connector (16), **characterized in that** the superstructure portal is a fixed beam (7) and a moveable beam (3) in the shape of a rectangular bar permanently fastened at a right angle to a rectangular bar (3a) having a bending and notches (3b) in the locations corresponding to the locations of latches (6) permanently fastened to the fixed beam (7) of the portal removably mounted on fixing pins (10) permanently fastened to the rear corner posts (8) of the body, and the moveable beam (3) is permanently fastened with the moveable arms (13) of the roof carriage (12).
